# FASCICULE DE BREVET EUROPEEN

(11) **EP 2 957 140 B1**
(45) Date de publication et mention de la délivrance du brevet: **01.11.2017**
(21) Numéro de dépôt: 14710008.5
(22) Date de dépôt: 14.02.2014
(51) Int. Cl.: H04W 60/00, H04W 28/06, H04W 80/04

(54) **PROCÉDÉ DE MISE A JOUR GROUPÉE D'ASSOCIATIONS ENTRE ADRESSES D'UN TERMINAL MOBILE**
VERFAHREN ZUR GRUPPENAKTUALISIERUNG VON VERBINDUNGEN ZWISCHEN ADRESSEN EINES MOBILEN ENDGERÄTS
METHOD FOR GROUP UPDATE OF ASSOCIATIONS BETWEEN ADDRESSES OF A MOBILE TERMINAL

(30) Priorité: 15.02.2013 FR 1351292
(43) Date de publication de la demande: 23.12.2015
(73) Titulaire: Orange, 75015 Paris (FR)
(72) Inventeur: ALI- AHMAD, Hassan, 35220 Chateaubourg (FR); OUZZIF, Meryem, F-35310 Mordelles (FR); BERTIN, Philippe, F-35690 Acigne (FR)
(86) Numéro de dépôt international: PCT/FR2014/050303
(87) Numéro de publication internationale: WO 2014/125227

(56) Documents cités:
- US-A1- 2004 047 348
- US-A1- 2005 044 362

## Description

### 1. Domaine de l'invention

La demande d'invention se situe dans le domaine des réseaux de communication mobile à commutation de paquet, et plus particulièrement celui de l'itinérance d'un terminal mobile vers un réseau qui n'est pas son réseau habituel.

### 2. Etat de la technique antérieure

Dans les réseaux de communication mobile basée sur le protocole Internet IP (Internet Protocol) selon les normes IETF (Internet Engineering Task Force) et plus particulièrement les normes MIPv6 (Mobile IPv6), un terminal mobile est associé à un réseau de domicile, dit Home Network, qui lui attribue une adresse IP lui permettant d'être localisé par son Home Network, dite Home Address, lorsque le terminal se trouve dans son Home Network. Lorsque le terminal mobile se trouve en situation d'itinérance dans un réseau étranger, dit Foreign Network, cette adresse ne suffit pas à localiser le terminal mobile. Le Foreign Network doit lui attribuer en plus une deuxième adresse IP, dite Care-of Address (CoA). C'est l'association entre la Home Address et cette CoA qui permet au Home Network de retrouver, où qu'il soit, le terminal mobile.

Cette CoA change chaque fois que le terminal mobile sort de la zone couverte par un réseau pour entrer dans une zone couverte par un autre réseau. Chaque fois que le terminal mobile change de CoA, il doit en notifier son Home Network, qui ne pourra le localiser correctement qu'à condition de connaître sa CoA la plus récente.

Cette notification est effectuée par un message de mise à jour appelée Binding Update, qui a pour effet de mettre à jour l'association entre CoA et Home Address. Dans le Home Network, l'équipement responsable de localiser le terminal mobile est appelé Home Agent. C'est lui qui reçoit les Binding Updates, met à jour les associations, et renvoie au terminal mobile des acquittements en réponse.

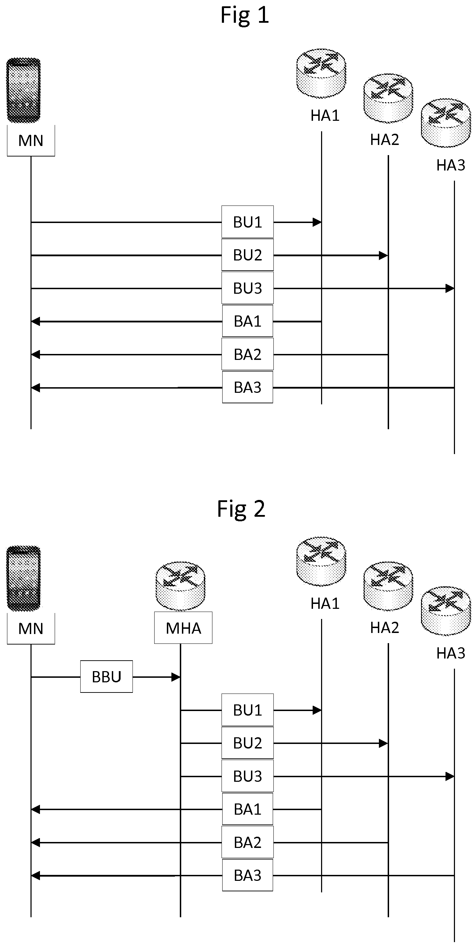

Selon les travaux issus du groupe de travail DMM (Distributed Mobility Management) de l'IETF, basés sur MIPv6, chaque routeur d'accès est doté des fonctionnalités de Home Agent. Par conséquent, le terminal mobile peut avoir plusieurs Home Addresses avec plusieurs Home Agents, ce qui est de plus en plus courant avec la multiplication et la spécialisation par domaine applicatif des réseaux mobile à commutation de paquets. Il doit donc émettre des Binding Updates à chacun de ses Home Agents, qui répondront chacun par un acquittement. Ceci est illustré par la **figure 1****,** où trois Home Agents HA1, HA2 et HA3 reçoivent du terminal MN respectivement les Binding Updates BU1, BU2 et BU3. En réponse, ils émettent vers le terminal MN respectivement les messages d'acquittement BA1, BA2 et BA3.

Comme tous ces messages de signalisation sont émis et reçus par le terminal mobile, ils occupent une partie importante des canaux radioélectriques utilisés entre le terminal et les premiers routeurs d'accès de réseau mobile, canaux qui constituent une ressource rare et précieuse. De plus l'émission de tous ces messages contribue à réduire l'autonomie de la batterie du terminal mobile.

Le document US 2004/047348 montre un procédé où un message groupé de mise à jour est dégroupé par un équipement de réseau de type "Foreign Agent", et les messages individuels de mise à jour générés sont envoyés vers des "Home Agents". Un des buts de l'invention est de remédier à des inconvénients de l'état de la technique.

### 3. Exposé de l'invention

L'invention vient améliorer la situation à l'aide d'un procédé d'émission d'un message de mise à jour d'associations entre au moins une première adresse et une deuxième adresse d'un terminal mobile, mis en oeuvre par un terminal mobile attaché par une pluralité de premières adresses à des premiers équipements d'au moins un premier réseau de communication mobile à commutation de paquets, lesdits premiers équipements étant aptes à diriger une pluralité de flux de communication vers le terminal mobile, le procédé comprenant
- une étape d'obtention d'une deuxième adresse lorsque le terminal mobile s'attache à un deuxième équipement d'un deuxième réseau,
- une étape de génération d'un message groupé de mise à jour, comprenant des informations individuelles relatives à la pluralité de premiers équipements, et une information relative au deuxième équipement,
- une étape d'émission du message groupé à destination d'un équipement de gestion préalablement associé au terminal mobile et apte à générer et transmettre des messages individuels de mise à jour, à partir du message groupé de mise à jour, à destination des premiers équipements.

Grâce au procédé d'émission selon l'invention, le terminal mobile n'émet plus qu'un seul message de mise à jour, alors que selon la technique antérieure, une pluralité de messages de mise à jour sont émis. L'encombrement du lien radioélectrique par lequel le terminal mobile émet est ainsi réduit, et la batterie du terminal est épargnée.

Par exemple, le premier réseau est le réseau de l'opérateur auquel l'utilisateur du terminal est abonné, dit Home Network, les premiers équipements sont des Home Agents, les premières adresses sont des Home Addresses, le deuxième réseau est un réseau étranger dans lequel l'utilisateur du terminal est en itinérance, dit Foreign Network, le deuxième équipement est un routeur d'un Foreign Network, la deuxième adresse est le Care-of Address attribuée au terminal mobile par le deuxième équipement, et le message individuel de mise à jour est un Binding Update. Au lieu d'envoyer à chacun des Home Agents un Binding Update comprenant, entre autres paramètres, le Care-of Address, le terminal n'envoie qu'un seul message s'apparentant à un Binding Update modifié, à destination d'un équipement de gestion qui, lui, se chargera d'envoyer les Binding Update correspondant à chacun des Home Agents.

Ceci va à l'encontre des préjugés de l'homme de métier car un des objectifs des protocoles gérant le changement d'adresse IP d'un terminal suite à sa mobilité, c'est-à-dire la mobilité IP, est, en particulier à l'IETF, de déplacer l'essentiel des traitements et des opérations vers la périphérie des réseaux, c'est-à-dire vers les terminaux des utilisateurs. Cette technique antérieure créée toutefois un effet secondaire indésirable, en l'occurrence une surcharge de la portion terminale de la liaison entre le terminal mobile et son premier routeur d'accès au réseau. Cette portion terminale est, rappelons-le, un lien radioélectrique. L'invention résout donc le problème de surcharge du lien radioélectrique en déportant du terminal vers un équipement de gestion une partie des opérations liées à la mobilité.

Selon un aspect de l'invention, le procédé d'émission d'un message de mise à jour comprend une étape de découverte de l'équipement de gestion par le terminal mobile.

Ainsi, le terminal mobile a la possibilité de mettre en place l'association de façon autonome en modifiant un protocole de découverte existant, ce qui lui évite de devoir recourir à la solution de la technique antérieure consistant à émettre lui-même la pluralité de messages individuels de mise à jour et ainsi de surcharger un lien radioélectrique.

Selon un aspect de l'invention, l'étape de génération d'un message groupé est précédée des étapes suivantes:
- une étape de génération d'une pluralité de messages individuels de mise à jour,
- une étape d'inhibition de l'émission de la pluralité de messages individuels de mise à jour vers les premiers équipements,
- une étape d'extraction des informations individuelles relatives à la pluralité de premiers équipements, et de l'information relative au deuxième réseau, à partir des messages individuels de mise à jour.

Ainsi, le procédé selon la technique antérieure, éventuellement mis en oeuvre par le terminal mobile, n'a pas besoin d'être supprimé ou modifié. Le procédé selon la technique antérieure est par exemple l'envoi de Binding Updates individuels à chacun des Home Agents.

Les étapes du procédé selon l'invention sont simplement rajoutées aux étapes existantes, ce qui simplifie la mise à niveau des terminaux mobiles pour les rendre conformes à l'invention.

Les différents aspects du procédé d'émission d'un message de mise à jour qui viennent d'être décrits peuvent être mis en oeuvre indépendamment les uns des autres ou en combinaison les uns avec les autres.

L'invention concerne aussi un procédé de dégroupement d'un message de mise à jour d'associations entre au moins une première adresse et une deuxième adresse d'un terminal mobile, mis en oeuvre par un équipement de gestion d'un réseau de communication mobile à commutation de paquets, le terminal mobile étant attaché par une pluralité de premières adresses à des premiers équipements d'au moins un premier réseau de communication mobile à commutation de paquets, lesdits premiers équipements étant aptes à diriger une pluralité de flux de communication vers le terminal mobile, le procédé comprenant:
- une étape de réception d'un message groupé de mise à jour en provenance du terminal mobile, le message groupé comprenant des informations individuelles relatives à la pluralité de premiers équipements, et une information relative à un deuxième équipement d'un deuxième réseau,
- une étape de génération d'une pluralité de messages individuels de mise à jour, à partir du message groupé,
- une étape d'émission de la pluralité de messages individuels de mise à jour vers les premiers équipements.

Grâce au procédé de dégroupement d'un message de mise à jour, l'équipement de gestion fait en sorte que les messages de mise à jour qui sont reçus par les Home Agents soient les mêmes que ceux qu'ils auraient reçus selon la technique antérieure, c'est-à-dire des Binding Updates reçus directement du terminal mobile. Ainsi, aucune modification aux Home Agents n'est nécessaire.

Selon un aspect de l'invention, l'étape de génération du procédé de dégroupement comprend:
- une étape de reproduction du message groupé en une pluralité de messages reproduits,
- et, pour chaque premier équipement de la pluralité, une étape de suppression, dans un des messages reproduits, de toutes les informations individuelles sauf celles relatives au premier équipement concerné.

Ainsi, l'étape de génération des messages individuels, par exemple l'étape de génération des Binding Updates, est simplifiée par la réutilisation des informations reçues. La mise en oeuvre de ces étapes dans un équipement existant, par exemple dans un Home Agent modifié, s'en trouve plus aisée.

L'invention concerne aussi un dispositif d'émission d'un message de mise à jour d'associations entre au moins une première adresse et une deuxième adresse d'un terminal mobile, mis en oeuvre par un terminal mobile attaché par une pluralité de premières adresses à des premiers équipements d'au moins un premier réseau de communication mobile à commutation de paquets, lesdits premiers équipements étant aptes à diriger une pluralité de flux de communication vers le terminal mobile, le dispositif comprenant:
- un module d'obtention d'une deuxième adresse lorsque le terminal mobile s'attache à un deuxième équipement d'un deuxième réseau,
- un module de génération d'un message groupé de mise à jour, comprenant des informations individuelles relatives à la pluralité de premiers équipements, et une information relative au deuxième équipement,
- un module d'émission du message groupé à destination d'un équipement de gestion apte à générer et transmettre des messages individuels de mise à jour, à partir du message groupé de mise à jour, à destination des premiers équipements.

Ce dispositif peut être mis en oeuvre dans un terminal mobile.

L'invention concerne aussi un dispositif de dégroupement d'un message de mise à jour d'associations entre au moins une première adresse et une deuxième adresse d'un terminal mobile, mis en oeuvre par un équipement de gestion d'un réseau de communication mobile à commutation de paquets, le terminal mobile étant attaché par une pluralité de premières adresses à des premiers équipements d'au moins un premier réseau de communication mobile à commutation de paquets, lesdits premiers équipements étant aptes à diriger une pluralité de flux de communication vers le terminal mobile, le dispositif comprenant:
- un module de réception d'un message groupé de mise à jour en provenance du terminal mobile, le message groupé comprenant des informations individuelles relatives à la pluralité de premiers équipements, et une information relative à un deuxième équipement d'un deuxième réseau,
- un module de génération d'une pluralité de messages individuels de mise à jour, à partir du message groupé,
- un module d'émission de la pluralité de messages individuels de mise à jour vers les premiers équipements.

Ce dispositif peut être mis en oeuvre dans un équipement quelconque du réseau, mais il peut être avantageux de le faire dans un équipement existant, en particulier dans un équipement existant auquel le terminal mobile est associé ou qu'il peut découvrir aisément, comme par exemple un Home Agent modifié.

L'invention concerne aussi un terminal mobile d'un réseau de communication mobile à commutation de paquets, mettant en oeuvre le dispositif d'émission d'un message de mise à jour qui vient d'être décrit.

L'invention concerne aussi un équipement de gestion d'un réseau de communication mobile à commutation de paquets, mettant en oeuvre le dispositif de dégroupement d'un message de mise à jour qui vient d'être décrit.

Selon un aspect de l'invention, l'équipement de gestion comprend en outre un module de transmission apte à diriger un flux de communication vers le terminal mobile.

Le dispositif de dégroupement peut être mis en oeuvre dans un équipement apte à diriger un flux de communication vers le terminal mobile, tel que par exemple un Home Agent. Avantageusement, le dispositif ne nécessite ainsi aucun équipement spécifique, et son association avec le terminal mobile est aisée à mettre en oeuvre.

L'invention concerne aussi un système de mise à jour d'associations entre au moins une première adresse et une deuxième adresse d'un terminal mobile, comprenant ledit terminal mobile et un équipement de gestion, le terminal mobile étant attaché par une pluralité de premières adresses à des premiers équipements d'au moins un premier réseau de communication mobile à commutation de paquets, lesdits premiers équipements étant aptes à diriger une pluralité de flux de communication vers le terminal mobile, le terminal mobile comprenant :
- un module d'obtention d'une deuxième adresse lorsque le terminal mobile s'attache à un deuxième équipement d'un deuxième réseau,
- un module de génération d'un message groupé de mise à jour, comprenant des informations individuelles relatives à la pluralité de premiers équipements, et une information relative au deuxième réseau,
- un module d'émission du message groupé de mise à jour à destination de l'équipement de gestion,
l'équipement de gestion comprenant:
- un module de réception dudit message groupé de mise à jour,
- un module de génération d'une pluralité de messages individuels de mise à jour, à partir du message groupé de mise à jour,
- un module d'émission de la pluralité de messages individuels de mise à jour, à destination desdits premiers équipements.

Grâce à ce système de mise à jour, les Binding Updates individuels selon la technique antérieure ne sont plus émis directement par le terminal mobile et par conséquent n'encombrent plus le lien radioélectrique l'attachant au réseau.

L'invention concerne aussi un signal portant un message groupé de mise à jour d'associations entre une pluralité de premières adresses d'un terminal mobile dans au moins un premier réseau de communication mobile à commutation de paquets, et une deuxième adresse du terminal mobile dans un deuxième réseau de communication mobile à commutation de paquets, le message groupé étant destiné à un équipement de gestion et comprenant la deuxième adresse et une pluralité d'informations individuelles relatives aux premiers réseaux, le message groupé étant en outre apte à déclencher la génération et l'émission, par l'équipement de gestion récepteur, de messages individuels de mise à jour à destination d'équipements de l'au moins un premier réseau, lesdits équipements étant aptes à diriger une pluralité de flux de communication vers le terminal mobile.

Le message groupé porté par le signal est par exemple un nouveau type de Binding Update "groupé", comprenant les informations nécessaires à la génération de Binding Updates individuels correspondants. La deuxième adresse est par exemple la Care-of Address, et les informations individuelles relatives à des premiers réseaux sont par exemple les adresses des Home Agents auxquels les Binding Udaptes sont destinés à être émis.

L'effet technique du signal portant un message groupé est de déclencher une suite d'opérations ayant pour résultat la réception de messages individuels par des équipements pour lesquels il est apparent que les messages individuels ont été émis par le terminal mobile directement. De cette manière, non seulement les messages individuels n'encombrent plus le lien radioélectrique du terminal mobile, mais aucune modification n'est nécessaire sur les équipements récepteurs des messages individuels.

L'invention concerne aussi un programme d'ordinateur comprenant des instructions pour la mise en oeuvre des étapes du procédé d'émission d'un message de mise à jour qui vient d'être décrit, lorsque ce procédé est exécuté par un processeur.

L'invention concerne aussi un support d'enregistrement lisible par un terminal mobile sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne aussi un programme d'ordinateur comprenant des instructions pour la mise en oeuvre des étapes du procédé de dégroupement d'un message de mise à jour qui vient d'être décrit, lorsque ce procédé est exécuté par un processeur.

L'invention concerne enfin un support d'enregistrement lisible par un équipement de gestion sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un système de mise à jour d'associations entre au moins une première adresse et une deuxième adresse d'un terminal mobile, selon la technique antérieure,
- la figure 2 présente de façon schématique un système de mise à jour d'associations entre au moins une première adresse et une deuxième adresse d'un terminal mobile, selon l'invention,
- la figure 3 présente un exemple de mise en oeuvre du procédé d'émission d'un message de mise à jour d'associations entre au moins une première adresse et une deuxième adresse d'un terminal mobile, selon un mode particulier de réalisation de l'invention,

- la figure 4 présente un exemple de mise en oeuvre du procédé de dégroupement d'un message de mise à jour d'associations entre au moins une première adresse et une deuxième adresse d'un terminal mobile, selon un mode particulier de réalisation de l'invention,
- la figure 5 présente un exemple de structure d'un dispositif d'émission d'un message de mise à jour d'associations entre au moins une première adresse et une deuxième adresse d'un terminal mobile, selon un aspect de l'invention,
- la figure 6 présente un exemple de structure d'un dispositif de dégroupement d'un message de mise à jour d'associations entre au moins une première adresse et une deuxième adresse d'un terminal mobile, selon un aspect de l'invention.

### 5. Description détaillée d'au moins un mode de réalisation de l'invention

Dans la suite de la description, on présente des exemples de modes de réalisation de l'invention se basant sur MIPv6 DMM, mais l'invention s'applique également à tout protocole où le terminal mobile peut avoir plusieurs Home Agents simultanément.

La **figure 2** présente de façon schématique un système de mise à jour d'associations entre au moins une première adresse et une deuxième adresse d'un terminal mobile, selon l'invention.

Le terminal mobile MN, au lieu d'émettre comme dans la technique antérieure des Binding Updates à chacun de ses Home Agents HA1, HA2 et HA3, émet à la place un seul message de mise à jour BBU (Bundled Binding Update, message "groupé" de mise à jour d'associations, en anglais), à destination d'un équipement de gestion MHA (Managing Home Agent, ou HA gestionnaire, en anglais). L'équipement de gestion MHA dégroupe le message BBU reçu pour générer et émettre les Binding Updates individuels BU1, BU2 et BU3 vers les trois Home Agents HA1, HA2 et HA3. Comme les Binding Updates individuels BU1, BU2 et BU3 sont identiques aux Binding Updates de la technique antérieure, les Home Agents HA1, HA2 et HA3 réagissent comme si les Binding updates avaient été émis directement par le terminal mobile MN. En conséquence, ils émettent en réponse vers le terminal MN les mêmes messages d'acquittement BA1, BA2 et BA3 que dans la technique antérieure.

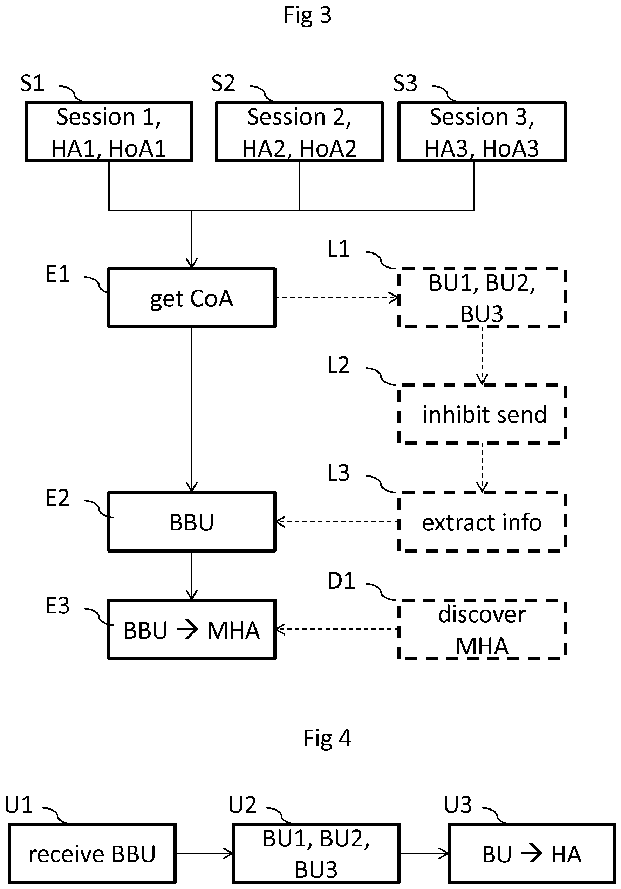

La **figure 3** présente un exemple de mise en oeuvre du procédé d'émission d'un message de mise à jour d'associations entre au moins une première adresse et une deuxième adresse d'un terminal mobile, selon un mode particulier de réalisation de l'invention.

Lors d'une étape S1 connue, le terminal mobile MN a établi une session de communication avec un équipement distant ED1, alors qu'il était attaché à un routeur d'accès d'un premier réseau de communication. Ce premier réseau est par exemple le réseau de l'opérateur auquel l'utilisateur du terminal est abonné, dit Home Network.

Au cours de la procédure d'établissement de ladite session, une adresse HoA1 (Home Address 1) a été attribuée au terminal MN par un équipement HA1 du réseau de communication. Cet équipement est par exemple un routeur d'accès, appelé "ancre de mobilité", ou également "Home Agent", apte à attribuer une adresse IP à un terminal mobile attaché à ce réseau, et à "porter" une session de ce terminal.

Lors d'étapes S2 et S3 similaires à S1, le terminal MN a également établi deux autres sessions de communication tout en étant attaché à un routeur d'accès du premier réseau de communication.

Ces étapes S1 à S3 illustrent ensemble un cas où par exemple le terminal mobile MN a établi trois sessions différentes avec trois équipements distants différents, lesdites sessions étant portées par trois ancres de mobilité différentes, HA1, HA2 et HA3.

Les étapes S1 à S3 sont préalables à un événement dont la conséquence est un attachement du terminal à un routeur d'accès d'un deuxième réseau différent du premier réseau, l'événement pouvant être par exemple une mobilité du terminal MN hors de la couverture du premier réseau.

Lors d'une étape E1, connue, le terminal mobile MN s'attache à un routeur d'accès d'un deuxième réseau et obtient de lui une nouvelle adresse CoA, appelée Care-of Address. Ce deuxième réseau est par exemple un réseau étranger dans lequel l'utilisateur du terminal est en itinérance, dit Foreign Network.

Lors d'une étape E2, le terminal mobile MN génère un message groupé de mise à jour BBU, comprenant une information indiquant l'association entre ses premières adresses HoA1, HoA2 et HoA3, et sa deuxième adresse CoA. La structure d'un tel message est détaillée par la suite dans la **table 2.**

Lors d'une étape E3, le terminal mobile MN émet un signal portant ce message BBU unique vers un équipement de gestion MHA préalablement associé au terminal MN.

Lors d'une étape D1 optionnelle et préalable à l'étape E3, le terminal MN a découvert l'équipement de gestion MHA parmi des routeurs d'accès du premier réseau à l'aide d'un protocole similaire au RFC 4861 (Neighbour Discovery for IPv6) ou au RFC 6275 (Mobility Support in IPv6), où un des bits réservés est utilisé pour indiquer que le routeur d'accès fonctionne également comme équipement de gestion apte à recevoir et à traiter un tel message BBU.

Le groupe d'étapes L1 à L3 est optionnel, consécutif à E1 et préalable à E2.

Lors d'une étape L1, le terminal mobile MN génère selon la technique antérieure des messages individuels de mise à jour BU1, BU2 et BU3.

La structure de ces messages de Binding Update dans IPv6 est décrite par la norme RFC 6275 (MIPv6). Le message BU1, par exemple, comprend plusieurs parties, tel qu'illustré dans la **table 1** ci-dessous.

**Table 1: Structure du message Binding Update BU1 selon la norme RFC 6275**

| *Champs ou sous-champs* | *Comprenant par exemple:* |
|---|---|
| IPv6 Header | Source Address=CoA |
| | Destination Address=HA1 |
| Home Address Option | Home Address=HoA1 |
| IPsec Header | IPsec=IPsec1 |
| Mobility Header | *permet d'identifier le type du message (= BU) et annonce la longueur restante du message* |
| Message Data | *autres informations relatives au message, telles que la durée de vie* |
| Mobility Options | *sous-champ optionnel de Message Data* |

L'information IPsec1 est une information caractérisant le type de sécurité du lien attachant le terminal MN au Home Agent HA1 et le niveau de sécurité de la session portée par HA1.

Lors d'une étape L2, le terminal MN inhibe l'émission des messages individuels BU1, BU2 et BU3, afin de ne pas encombrer de canal radioélectrique.

Lors d'une étape L3, le terminal MN extrait de chacun des messages individuels BU1, BU2 et BU3 les informations destinées à générer le message BBU.

L'étape L3 est suivie de l'étape E2, où, comme expliqué plus haut, le terminal mobile MN génère un message groupé de mise à jour BBU. La structure d'un tel message est détaillée dans la **table 2** ci-dessous.

**Table 2: Structure du message Bundled Binding Update BBU**

| *Champs ou sous-champs* | *Comprenant par exemple:* |
|---|---|
| IPv6 Header | Source Address=CoA |
| | Destination Address=MHA |
| Home Address Option | Home Address=HoA-MHA |
| IPsec Header | IPsec=IPsec-MHA |
| Mobility Header | *permet d'identifier le type du message (= BU) et annonce la longueur restante du message* |
| Message Data | *autres informations relatives au message, telles que la durée de vie* |
| Mobility Options | Option 1: |
| | Type=12, |
| | Length=Length1, |
| | Home Address=HoA1, |
| | Home Agent Address=HA1, |
| | IPsec=IPsec1 |
| | Option 2: |
| | Type=12, |
| | Length=Length2, |
| | Home Address=HoA2, |
| | Home Agent Address=HA2, |
| | IPsec=IPsec2 |
| | Option 3: |
| | Type=12, |
| | Length=Length3, |
| | Home Address=HoA3, |
| | Home Agent Address=HA3, |
| | IPsec=IPsec3 |

La structure du message de Bundled Binding Update BBU est la même que celle des messages de Binding Update qui est décrite par la norme RFC 6275.

L'adresse HoA-MHA est celle du terminal mobile pour le managing Home Agent MHA. L'information IPsec-MHA est une information caractérisant le type de sécurité du lien attachant le terminal MN au Managing Home Agent MHA et le niveau de sécurité de la session portée par MHA.

Le sous-champ optionnel Mobility Options est utilisé pour transporter les informations utiles, transportées selon la technique antérieure dans les champs IPv6 Header, Home Address Option et IPsec Header dans le cas des messages de Binding Update. Selon l'invention, un nouveau type de Mobility Option est créé avec par exemple une valeur égale à 12, afin que l'équipement récepteur du message, par exemple le Managing Home Agent MHA, reconnaisse que le message est un "Bundled Binding Update", et non pas un "Binding Update" et puisse récupérer les informations utiles.

On comprend que pour générer un Bundled Binding Update, il est aisé de regrouper les informations comprises dans des Binding Updates individuels, si ces Binding Updates ont déjà été générés.

La **figure 4** présente un exemple de mise en oeuvre du procédé de dégroupement d'un message de mise à jour d'associations entre au moins une première adresse et une deuxième adresse d'un terminal mobile, selon un mode particulier de réalisation de l'invention.

Lors d'une étape U1, un équipement de gestion MHA reçoit d'un terminal mobile MN un signal portant un message BBU. Le message BBU, décrit dans la table 2, comprend, dans le champ Mobility Options, des informations individuelles relatives à trois Home Agents d'un premier réseau portant chacun une session du terminal mobile MN, et dans le champ IPv6 Header, une information, CoA, relative à un deuxième réseau auquel le terminal MN s'est attaché.

Lors d'une étape U2, l'équipement de gestion MHA génère trois messages individuels de Binding Update BU1, BU2 et BU3, à partir des informations comprises dans le message BBU.

Lors d'une étape U3, l'équipement de gestion MHA émet les messages BU1, BU2 et BU3, respectivement vers les Home Agents HA1, HA2 et HA3. Les messages BU1, BU2 et BU3 sont identiques à ceux qu'aurait émis le terminal mobile MN s'il avait du les émettre selon la technique antérieure. L'invention ne nécessite donc aucune modification des Home Agents.

Dans une variante non illustrée, l'étape U2 met à profit l'identité de structure entre les messages de type BBU et les messages de type BU, afin de simplifier la génération des messages individuels de type BU de la façon suivante.

Dans une première sous-étape, le message BBU est reproduit en trois exemplaires BBU1, BBU2 et BBU3.

Dans une deuxième sous-étape relative à BBU1, toutes les informations du champs Mobility Options de BBU1 sont supprimées, sauf HoA1, HA1 et IPsec1, qui sont déplacées respectivement vers les champs Home Address Options, IPv6 Header et IPsec Header de BBU1. Le sous-champ "Source Address=CoA" est conservé, et le sous-champ Mobility Options est supprimé. On obtient ainsi le message BU1, prêt à être émis.

L'équivalent est effectué sur BBU2 et BBU3 afin d'obtenir BU2 er BU3.

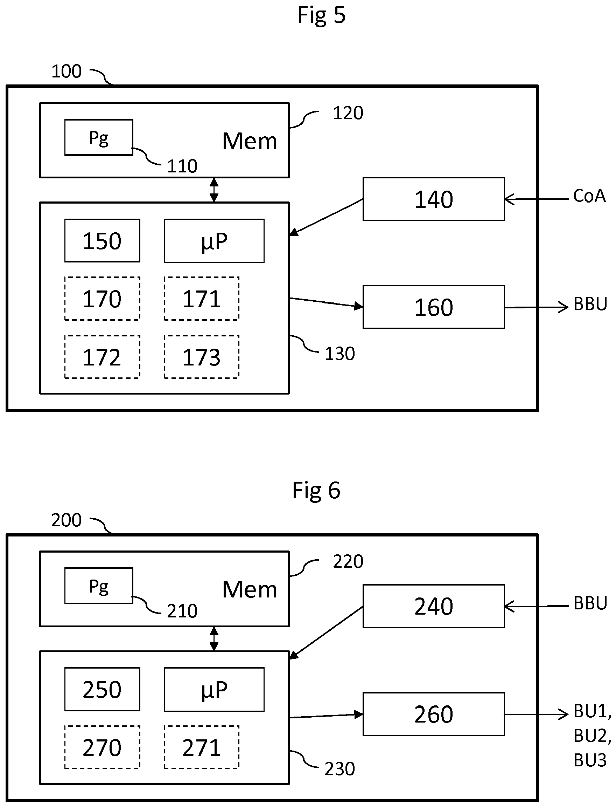

En relation avec la **figure 5****,** on présente maintenant un exemple de structure d'un dispositif d'émission d'un message de mise à jour d'associations entre au moins une première adresse et une deuxième adresse d'un terminal mobile, selon un aspect de l'invention.

Le dispositif 100 d'émission d'un message de mise à jour met en oeuvre le procédé d'émission d'un message de mise à jour, dont différents modes de réalisation viennent d'être décrits.

Un tel dispositif 100 peut être mis en oeuvre dans un terminal mobile apte à se connecter à des réseaux de communication mobile à commutation de paquets.

Par exemple, le dispositif 100 comprend une unité de traitement 130, équipée par exemple d'un microprocesseur µP, et pilotée par un programme d'ordinateur 110, stocké dans une mémoire 120 et mettant en oeuvre le procédé d'émission d'un message de mise à jour selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend :
- un module de réception 140, apte à recevoir un message comprenant une adresse (CoA) lorsque le terminal s'attache à un équipement d'un réseau de communication mobile à commutation de paquets, en provenance dudit équipement,
- un module de génération 150, apte à générer un message (BBU) groupé de mise à jour, comprenant des informations individuelles relatives à une pluralité de réseaux auxquels le terminal s'est attaché, et une information relative au réseau auquel le terminal s'est attaché en dernier,
- un module d'émission 160, apte à émettre un signal portant un message (BBU) groupé de mise à jour, à destination d'un équipement de gestion apte à générer et transmettre des messages individuels de mise à jour.

Avantageusement, l'unité de traitement 130 peut comprendre:
- un module de découverte 170, apte à découvrir un équipement de gestion apte à générer et transmettre des messages individuels de mise à jour,
- un module de génération 171, apte à générer des messages individuels de mise à jour,
- un module d'inhibition 172, apte à inhiber l'émission des messages individuels de mise à jour générés,
- un module d'extraction 173, apte à extraire, à partir des messages individuels de mise à jour, des informations individuelles relatives à une pluralité de réseaux auxquels le terminal s'est attaché, et une information relative au réseau auquel le terminal s'est attaché en dernier.

En relation avec la **figure 6****,** on présente maintenant un exemple de structure d'un dispositif de dégroupement d'un message de mise à jour d'associations entre au moins une première adresse et une deuxième adresse d'un terminal mobile, selon un aspect de l'invention.

Le dispositif 200 de dégroupement d'un message de mise à jour met en oeuvre le procédé de dégroupement d'un message de mise à jour, dont différents modes de réalisation viennent d'être décrits.

Un tel dispositif 200 peut être mis en oeuvre dans un équipement de gestion d'un réseau de communication mobile à commutation de paquets. Par exemple, cet équipement de gestion peut être apte à diriger un flux de communication vers un terminal mobile. En particulier, il peut être un équipement de type "Home Agent".

Par exemple, le dispositif 200 comprend une unité de traitement 230, équipée par exemple d'un microprocesseur µP, et pilotée par un programme d'ordinateur 210, stocké dans une mémoire 220 et mettant en oeuvre le procédé d'émission d'un message de mise à jour selon l'invention. A l'initialisation, les instructions de code du programme d'ordinateur 210 sont par exemple chargées dans une mémoire RAM, avant d'être exécutées par le processeur de l'unité de traitement 230.

Un tel dispositif 200 comprend :
- un module de réception 240, apte à recevoir un signal portant un message (BBU) groupé de mise à jour, comprenant des informations individuelles relatives à une pluralité de réseaux auxquels un terminal s'est attaché, et une information relative à un réseau auquel le terminal s'est attaché en dernier,
- un module de génération 250, apte à générer des messages (BU1, BU2, BU3) individuels de mise à jour,
- un module d'émission 260, apte à émettre des messages (BU1, BU2, BU3) individuels de mise à jour, à destination d'équipements auxquels le terminal s'est attaché.

Avantageusement, l'unité de traitement 230 peut comprendre:
- un module de reproduction 270, apte à reproduire le message groupé de mise à jour,
- un module de suppression 271, apte à supprimer, d'un message groupé de mise à jour reproduit, des informations individuelles relatives à une pluralité de réseaux auxquels le terminal s'est attaché.

Les modules décrits en relation avec les figures 5 et 6 peuvent être des modules matériels ou logiciels.

Les exemples de réalisation de l'invention qui viennent d'être présentés ne sont que quelques uns des modes de réalisation envisageables. Ils montrent que l'invention permet à un terminal mobile ayant obtenu une nouvelle adresse de notifier ce changement à une pluralité d'équipements auxquels il est attaché, à l'aide d'un seul message, diminuant ainsi l'encombrement généré par le terminal mobile sur les canaux radioélectriques qu'il utilise, ainsi que la consommation de sa batterie.

## Revendications

1. **Procédé d'émission d'un message de mise à jour d'associations entre au moins une première adresse et une deuxième adresse d'un terminal mobile,** mis en oeuvre par un terminal mobile attaché par une pluralité de premières adresses à des premiers équipements d'au moins un premier réseau de communication mobile à commutation de paquets,
lesdits premiers équipements étant aptes à diriger une pluralité de flux de communication vers le terminal mobile,
le procédé comprenant une étape d'obtention d'une deuxième adresse lorsque le terminal mobile s'attache à un deuxième équipement d'un deuxième réseau,
le procédé comprenant :
- une étape de génération d'un message groupé de mise à jour, comprenant des informations individuelles relatives à la pluralité de premiers équipements, et une information relative au deuxième équipement,
et le procédé étant **caractérisé par**
- une étape d'émission du message groupé à destination d'un équipement de gestion, de type "Home Agent", préalablement associé au terminal mobile et apte à générer et transmettre des messages individuels de mise à jour, à partir du message groupé de mise à jour, à destination des premiers équipements.

2. **Procédé d'émission d'un message de mise à jour** selon la revendication 1, **caractérisé en ce que**
le procédé comprend une étape de découverte de l'équipement de gestion par le terminal mobile.

3. **Procédé d'émission d'un message de mise à jour** selon la revendication 1, **caractérisé en ce que**
l'étape de génération d'un message groupé est précédée des étapes suivantes:
- une étape de génération d'une pluralité de messages individuels de mise à jour,
- une étape d'inhibition de l'émission de la pluralité de messages individuels de mise à jour vers les premiers équipements,
- une étape d'extraction des informations individuelles relatives à la pluralité de premiers équipements, et de l'information relative au deuxième réseau, à partir des messages individuels de mise à jour.

4. **Procédé de dégroupement d'un message de mise à jour d'associations entre au moins une première adresse et une deuxième adresse d'un terminal mobile,** mis en oeuvre par un équipement de gestion, de type "Home Agent", d'un réseau de communication mobile à
commutation de paquets, le terminal mobile étant attaché par une pluralité de premières adresses à des premiers équipements d'au moins un premier réseau de communication mobile à commutation de paquets,
lesdits premiers équipements étant aptes à diriger une pluralité de flux de communication vers le terminal mobile,
**caractérisé en ce que**
le procédé comprend:
- une étape de réception d'un message groupé de mise à jour en provenance du terminal mobile, le message groupé comprenant des informations individuelles relatives à la pluralité de premiers équipements, et une information relative à un deuxième équipement d'un deuxième réseau où le terminal mobile est attaché;
- une étape de génération d'une pluralité de messages individuels de mise à jour, à partir du message groupé,
- une étape d'émission de la pluralité de messages individuels de mise à jour vers les premiers équipements.

5. **Procédé de dégroupement d'un message de mise à jour** selon la revendication 4, **caractérisé en ce que**
l'étape de génération comprend:
- une étape de reproduction du message groupé en une pluralité de messages reproduits,
- et, pour chaque premier équipement de la pluralité, une étape de suppression, dans un des messages reproduits, de toutes les informations individuelles sauf celles relatives au premier équipement concerné.

6. **Dispositif d'émission d'un message de mise à jour d'associations entre au moins une première adresse et une deuxième adresse d'un terminal mobile,** mis en oeuvre par un terminal mobile attaché par une pluralité de premières adresses à des premiers équipements d'au moins un premier réseau de communication mobile à commutation de paquets,
lesdits premiers équipements étant aptes à diriger une pluralité de flux de communication vers le terminal mobile,
le dispositif comprenant un module d'obtention d'une deuxième adresse lorsque le terminal mobile s'attache à un deuxième équipement d'un deuxième réseau,
le dispositif comprenant :
- un module de génération d'un message groupé de mise à jour, comprenant des informations individuelles relatives à la pluralité de premiers équipements, et une information relative au deuxième équipement,
et le dispositif étant **caractérisé en ce qu'**il comprend en outre:
- un module d'émission du message groupé à destination d'un équipement de gestion, de type "Home Agent", apte à générer et transmettre des messages individuels de mise à jour, à partir du message groupé de mise à jour, à destination des premiers équipements.

7. **Dispositif de dégroupement d'un message de mise à jour d'associations entre au moins une première adresse et une deuxième adresse d'un terminal mobile,** mis en oeuvre par un équipement de gestion, de type "Home Agent", d'un réseau de communication mobile à
commutation de paquets, le terminal mobile étant attaché par une pluralité de premières adresses à des premiers équipements d'au moins un premier réseau de communication mobile à commutation de paquets,
lesdits premiers équipements étant aptes à diriger une pluralité de flux de communication vers le terminal mobile,
**caractérisé en ce que**
le dispositif comprend:
- un module de réception d'un message groupé de mise à jour en provenance du terminal mobile, le message groupé comprenant des informations individuelles relatives à la pluralité de premiers équipements, et une information relative à un deuxième équipement d'un deuxième réseau où le terminal mobile est attaché,
- un module de génération d'une pluralité de messages individuels de mise à jour, à partir du message groupé,
- un module d'émission de la pluralité de messages individuels de mise à jour vers les premiers équipements.

8. **Terminal mobile** d'un réseau de communication mobile à commutation de paquets, **caractérisé en ce qu'**il met en oeuvre un dispositif d'émission d'un message de mise à jour selon la revendication 6.

9. **Equipement de gestion** d'un réseau de communication mobile à commutation de paquets, **caractérisé en ce qu'**il met en oeuvre un dispositif de dégroupement d'un message de mise à jour selon la revendication 7.

10. **Equipement de gestion** selon la revendication 9, **caractérisé en ce qu'**il comprend en outre un module de transmission apte à diriger un flux de communication vers le terminal mobile.

11. **Système de mise à jour d'associations entre au moins une première adresse et une deuxième adresse d'un terminal mobile,** comprenant ledit terminal mobile et un équipement de gestion, de type "Home Agent", le terminal mobile étant attaché par une pluralité de premières adresses à des premiers équipements d'au moins un premier réseau de communication mobile à commutation de paquets, lesdits premiers équipements étant aptes à diriger une pluralité de flux de communication vers le terminal mobile,
le terminal mobile comprenant :
- un module d'obtention d'une deuxième adresse lorsque le terminal mobile s'attache à un deuxième équipement d'un deuxième réseau,
- un module de génération d'un message groupé de mise à jour, comprenant des informations individuelles relatives à la pluralité de premiers équipements, et une information relative au deuxième réseau,
- un module d'émission du message groupé de mise à jour à destination de l'équipement de gestion,
l'équipement de gestion comprenant:
- un module de réception dudit message groupé de mise à jour,
- un module de génération d'une pluralité de messages individuels de mise à jour, à partir du message groupé de mise à jour,
- un module d'émission de la pluralité de messages individuels de mise à jour, à destination desdits premiers équipements.

12. **Signal** portant un message groupé de mise à jour d'associations entre une pluralité de premières adresses d'un terminal mobile dans au moins un premier réseau de communication mobile à commutation de paquets, et une deuxième adresse du terminal mobile dans un deuxième réseau de communication mobile à commutation de paquets, le terminal mobile étant attaché par la pluralité de premières adresses à des premiers équipements de l'au moins un premier réseau, lesdits premiers équipements étant aptes à diriger une pluralité de flux de communication vers le terminal mobile, **caractérisé en ce que** le message groupé est destiné à un équipement de gestion, de type "Home Agent", et comprend la deuxième adresse et une pluralité d'informations individuelles relatives à la pluralité de premiers équipements, **et en ce que** le message groupé est apte à déclencher la génération et l'émission, par l'équipement de gestion récepteur, de messages individuels de mise à jour à destination des premiers équipements de l'au moins un premier réseau,

13. **Programme d'ordinateur, caractérisé en ce qu'**il comprend des instructions pour la mise en oeuvre des étapes du procédé d'émission d'un message de mise à jour selon la revendication 1, lorsque ce procédé est exécuté par un processeur.

14. **Programme d'ordinateur, caractérisé en ce qu'**il comprend des instructions pour la mise en oeuvre des étapes du procédé de dégroupement d'un message de mise à jour selon la revendication 4, lorsque ce procédé est exécuté par un processeur.

## Patentansprüche

1. Verfahren zum Senden einer Nachricht zur Aktualisierung von Zuordnungen zwischen wenigstens einer ersten Adresse und einer zweiten Adresse eines mobilen Endgeräts, welches von einem mobilen Endgerät durchgeführt wird, das durch mehrere erste Adressen mit ersten Einrichtungen wenigstens eines ersten paketvermittelten Mobilkommunikationsnetzes verbunden ist,
wobei die ersten Einrichtungen geeignet sind, mehrere Kommunikationsflüsse zu dem mobilen Endgerät zu lenken,
wobei das Verfahren einen Schritt der Gewinnung einer zweiten Adresse, wenn sich das mobile Endgerät mit einer zweiten Einrichtung eines zweiten Netzes verbindet, umfasst,
wobei das Verfahren umfasst:
- einen Schritt der Erzeugung einer Gruppenaktualisierungsnachricht, welche individuelle Informationen bezüglich der mehreren ersten Einrichtungen und eine Information bezüglich der zweiten Einrichtung umfasst,
und das Verfahren **gekennzeichnet ist durch**
- einen Schritt des Sendens der Gruppennachricht an eine Managementeinrichtung vom Typ "Home Agent", die zuvor dem mobilen Endgerät zugeordnet wurde und geeignet ist, aus der Gruppenaktualisierungsnachricht individuelle Aktualisierungsnachrichten zu erzeugen und zu den ersten Einrichtungen zu übertragen.

2. Verfahren zum Senden einer Nachricht zur Aktualisierung nach Anspruch 1,
**dadurch gekennzeichnet, dass**
das Verfahren einen Schritt der Erkennung der Managementeinrichtung durch das mobile Endgerät umfasst.

3. Verfahren zum Senden einer Nachricht zur Aktualisierung nach Anspruch 1,
**dadurch gekennzeichnet, dass**
dem Schritt der Erzeugung einer Gruppennachricht die folgenden Schritte vorangehen:
- ein Schritt der Erzeugung mehrerer individueller Aktualisierungsnachrichten,
- ein Schritt der Unterbindung des Sendens der mehreren individuellen Aktualisierungsnachrichten an die ersten Einrichtungen,
- ein Schritt der Extraktion der individuellen Informationen bezüglich der mehreren ersten Einrichtungen und der Information bezüglich des zweiten Netzes aus den individuellen Aktualisierungsnachrichten.

4. Verfahren zur Entgruppierung einer Nachricht zur Aktualisierung von Zuordnungen zwischen wenigstens einer ersten Adresse und einer zweiten Adresse eines mobilen Endgeräts, welches von einer Managementeinrichtung vom Typ "Home Agent" eines paketvermittelten Mobilkommunikationsnetzes durchgeführt wird, wobei das mobile Endgerät durch mehrere erste Adressen mit ersten Einrichtungen wenigstens eines ersten paketvermittelten Mobilkommunikationsnetzes verbunden ist,
wobei die ersten Einrichtungen geeignet sind, mehrere Kommunikationsflüsse zu dem mobilen Endgerät zu lenken,
**dadurch gekennzeichnet, dass**
das Verfahren umfasst:
- einen Schritt des Empfangs einer von dem mobilen Endgerät stammenden Gruppenaktualisierungsnachricht, wobei die Gruppennachricht individuelle Informationen bezüglich der mehreren ersten Einrichtungen und eine Information bezüglich einer zweiten Einrichtung eines zweiten Netzes, mit der das mobile Endgerät verbunden ist, umfasst;
- einen Schritt der Erzeugung mehrerer individueller Aktualisierungsnachrichten aus der Gruppennachricht,
- einen Schritt des Sendens der mehreren individuellen Aktualisierungsnachrichten an die ersten Einrichtungen.

5. Verfahren zur Entgruppierung einer Nachricht zur Aktualisierung nach Anspruch 4,
**dadurch gekennzeichnet, dass**
der Schritt der Erzeugung umfasst:
- einen Schritt der Reproduktion der Gruppennachricht in mehreren reproduzierten Nachrichten,
- und für jede erste Einrichtung der mehreren Einrichtungen einen Schritt der Unterdrückung, in einer der reproduzierten Nachrichten, aller individuellen Informationen mit Ausnahme derjenigen, die sich auf die betreffende erste Einrichtung beziehen.

6. Vorrichtung zum Senden einer Nachricht zur Aktualisierung von Zuordnungen zwischen wenigstens einer ersten Adresse und einer zweiten Adresse eines mobilen Endgeräts, welche von einem mobilen Endgerät eingesetzt wird, das durch mehrere erste Adressen mit ersten Einrichtungen wenigstens eines ersten paketvermittelten Mobilkommunikationsnetzes verbunden ist,
wobei die ersten Einrichtungen geeignet sind, mehrere Kommunikationsflüsse zu dem mobilen Endgerät zu lenken,
wobei die Vorrichtung ein Modul zur Gewinnung einer zweiten Adresse, wenn sich das mobile Endgerät mit einer zweiten Einrichtung eines zweiten Netzes verbindet, umfasst,
wobei die Vorrichtung umfasst:
- ein Modul zur Erzeugung einer Gruppenaktualisierungsnachricht, welche individuelle Informationen bezüglich der mehreren ersten Einrichtungen und eine Information bezüglich der zweiten Einrichtung umfasst,
und die Vorrichtung **dadurch gekennzeichnet ist, dass** sie außerdem umfasst:
- ein Modul zum Senden der Gruppennachricht an eine Managementeinrichtung vom Typ "Home Agent", die geeignet ist, aus der Gruppenaktualisierungsnachricht individuelle Aktualisierungsnachrichten zu erzeugen und zu den ersten Einrichtungen zu übertragen.

7. Vorrichtung zur Entgruppierung einer Nachricht zur Aktualisierung von Zuordnungen zwischen wenigstens einer ersten Adresse und einer zweiten Adresse eines mobilen Endgeräts, welche von einer Managementeinrichtung vom Typ "Home Agent" eines paketvermittelten Mobilkommunikationsnetzes eingesetzt wird, wobei das mobile Endgerät durch mehrere erste Adressen mit ersten Einrichtungen wenigstens eines ersten paketvermittelten Mobilkommunikationsnetzes verbunden ist,
wobei die ersten Einrichtungen geeignet sind, mehrere Kommunikationsflüsse zu dem mobilen Endgerät zu lenken,
**dadurch gekennzeichnet, dass**
die Vorrichtung umfasst:
- ein Modul zum Empfang einer von dem mobilen Endgerät stammenden Gruppenaktualisierungsnachricht, wobei die Gruppennachricht individuelle Informationen bezüglich der mehreren ersten Einrichtungen und eine Information bezüglich einer zweiten Einrichtung eines zweiten Netzes, mit der das mobile Endgerät verbunden ist, umfasst,
- ein Modul zur Erzeugung mehrerer individueller Aktualisierungsnachrichten aus der Gruppennachricht,
- ein Modul zum Senden der mehreren individuellen Aktualisierungsnachrichten an die ersten Einrichtungen.

8. Mobiles Endgerät eines paketvermittelten Mobilkommunikationsnetzes, **dadurch gekennzeichnet, dass** es eine Vorrichtung zum Senden einer Nachricht zur Aktualisierung nach Anspruch 6 einsetzt.

9. Managementeinrichtung eines paketvermittelten Mobilkommunikationsnetzes, **dadurch gekennzeichnet, dass** sie eine Vorrichtung zur Entgruppierung einer Nachricht zur Aktualisierung nach Anspruch 7 einsetzt.

10. Managementeinrichtung nach Anspruch 9, **dadurch gekennzeichnet, dass** sie außerdem ein Übertragungsmodul umfasst, das geeignet ist, einen Kommunikationsfluss zu dem mobilen Endgerät zu lenken.

11. System zur Aktualisierung von Zuordnungen zwischen wenigstens einer ersten Adresse und einer zweiten Adresse eines mobilen Endgeräts,
welches das mobile Endgerät und eine Managementeinrichtung vom Typ "Home Agent" umfasst, wobei das mobile Endgerät durch mehrere erste Adressen mit ersten Einrichtungen wenigstens eines ersten paketvermittelten Mobilkommunikationsnetzes verbunden ist, wobei die ersten Einrichtungen geeignet sind, mehrere Kommunikationsflüsse zu dem mobilen Endgerät zu lenken,
wobei das mobile Endgerät umfasst:
- ein Modul zur Gewinnung einer zweiten Adresse, wenn sich das mobile Endgerät mit einer zweiten Einrichtung eines zweiten Netzes verbindet,
- ein Modul zur Erzeugung einer Gruppenaktualisierungsnachricht, welche individuelle Informationen bezüglich der mehreren ersten Einrichtungen und eine Information bezüglich des zweiten Netzes umfasst,
- ein Modul zum Senden der Gruppenaktualisierungsnachricht an die Managementeinrichtung,
wobei die Managementeinrichtung umfasst:
- ein Modul zum Empfang der Gruppenaktualisierungsnachricht,
- ein Modul zur Erzeugung mehrerer individueller Aktualisierungsnachrichten aus der Gruppenaktualisierungsnachricht,
- ein Modul zum Senden der mehreren individuellen Aktualisierungsnachrichten an die ersten Einrichtungen.

12. Signal, welches eine Gruppennachricht zur Aktualisierung von Zuordnungen zwischen mehreren ersten Adressen eines mobilen Endgeräts in wenigstens einem ersten paketvermittelten Mobilkommunikationsnetz und einer zweiten Adresse des mobilen Endgeräts in einem zweiten paketvermittelten Mobilkommunikationsnetz transportiert,
wobei das mobile Endgerät durch die mehreren ersten Adressen mit ersten Einrichtungen des wenigstens einen ersten Netzes verbunden ist, wobei die ersten Einrichtungen geeignet sind, mehrere Kommunikationsflüsse zu dem mobilen Endgerät zu lenken,
**dadurch gekennzeichnet, dass**
die Gruppennachricht für eine Managementeinrichtung vom Typ "Home Agent" bestimmt ist und die zweite Adresse und mehrere individuelle Informationen bezüglich der mehreren ersten Einrichtungen umfasst,
und dadurch, dass die Gruppennachricht geeignet ist, die Erzeugung und das Senden, durch die empfangende Managementeinrichtung, individueller Aktualisierungsnachrichten an die ersten Einrichtungen des wenigstens einen ersten Netzes auszulösen.

13. Computerprogramm, **dadurch gekennzeichnet, dass** es Anweisungen zur Durchführung der Schritte des Verfahrens zum Senden einer Nachricht zur Aktualisierung nach Anspruch 1, wenn dieses Verfahren von einem Prozessor ausgeführt wird, umfasst.

14. Computerprogramm, **dadurch gekennzeichnet, dass** es Anweisungen zur Durchführung der Schritte des Verfahrens zur Entgruppierung einer Nachricht zur Aktualisierung nach Anspruch 4, wenn dieses Verfahren von einem Prozessor ausgeführt wird, umfasst.

## Claims

1. **Method for transmitting a message for updating associations between at least one first address and one second address of a mobile terminal,** implemented by a mobile terminal attached by a plurality of first addresses to first devices of at least one first packet-switched mobile communication network,
said first devices being capable of directing a plurality of communication flows to the mobile terminal,
the method including a step of obtaining a second address when the mobile terminal is attached to a second device of a second network,
the method including:
- a step of generating a bundled update message, including individual information relating to the plurality of first devices, and information relating to the second device,
and the method being **characterized by**
- a step of transmitting the bundled message to a management device, of the Home Agent type, previously associated with the mobile terminal and capable of generating and transmitting individual update messages, from the bundled update message, to the first devices.

2. **Method for transmitting an update message** according to Claim 1, **characterized in that**
the method includes a step of discovering the management device by the mobile terminal.

3. **Method for transmitting an update message** according to Claim 1, **characterized in that**
the step of generating a bundled message is preceded by the following steps:
- a step of generating a plurality of individual update messages,
- a step of inhibiting the transmission of the plurality of individual update messages to the first devices,
- a step of extracting individual information relating to the plurality of first devices, and information relating to the second network, from individual update messages.

4. **Method for unbundling a message for updating associations between at least one first address and one second address of a mobile terminal,** implemented by a management device, of the Home Agent type, of a packet-switched mobile communication network, the mobile terminal being attached by a plurality of first addresses to first devices of at least one first packet-switched mobile communication network,
said first devices being capable of directing a plurality of communication flows to the mobile terminal,
**characterized in that**
the method comprises:
- a step of receiving a bundled update message from the mobile terminal, the bundled message including individual information relating to the plurality of first devices, and information relating to a second device of a second network where the mobile terminal is attached,
- a step of generating a plurality of individual update messages, from the bundled message,
- a step of transmitting the plurality of individual update messages to the first devices.

5. **Method for unbundling an update message** according to Claim 4,
**characterized in that**
the generating step includes:
- a step of reproducing the bundled message in a plurality of reproduced messages,
- and, for each first device of the plurality, a step of eliminating, in one of the reproduced messages, all the individual information except that relating to the first device concerned.

6. **Device for transmitting a message for updating associations between at least one first address and one second address of a mobile terminal,** implemented by a mobile terminal attached by a plurality of first addresses to first devices of at least one first packet-switched mobile communication network,
said first devices being capable of directing a plurality of communication flows to the mobile terminal,
the device including a module for obtaining a second address when the mobile terminal is attached to a second device of a second network,
the device comprising:
- a module for generating a bundled update message, including individual information relating to the plurality of first devices, and information relating to the second device,
and the device being **characterized in that** it further includes:
- a module for transmitting the bundled message to a management device, of the Home Agent type, capable of generating and transmitting individual update messages, from the bundled update message, to the first devices.

7. **Device for unbundling a message for updating associations between at least one first address and one second address of a mobile terminal,** implemented by a management device, of the Home Agent type, of a packet-switched mobile communication network, the mobile terminal being attached by a plurality of first addresses to first devices of at least one first packet-switched mobile communication network,
said first devices being capable of directing a plurality of communication flows to the mobile terminal,
**characterized in that**
the device includes:
- a module for receiving a bundled update message from the mobile terminal, the bundled message including individual information relating to the plurality of first devices, and information relating to a second device of a second network where the mobile terminal is attached,
- a module for generating a plurality of individual update messages, from the bundled message,
- a module for transmitting the plurality of individual update messages to the first devices.

8. **Mobile terminal** of a packet-switched mobile communication network, **characterized in that** it implements a device for transmitting an update message according to Claim 6.

9. **Management device** of a packet-switched mobile communication network, **characterized in that** it implements a device for unbundling an update message according to Claim 7.

10. **Management device** according to Claim 9, **characterized in that** it further includes a transmitting module capable of directing a communication flow to the mobile terminal.

11. **System for updating associations between at least one first address and one second address of a mobile terminal,**
it including said mobile terminal and a management device, of the Home Agent type, the mobile terminal being attached by a plurality of first addresses to first devices of at least one first packet-switched mobile communication network, said first devices being capable of directing a plurality of communication flows to the mobile terminal,
the mobile terminal including:
- a module for obtaining a second address when the mobile terminal is attached to a second device of a second network,
- a module for generating a bundled update message, including individual information relating to the plurality of first devices, and information relating to the second network,
- a module for transmitting the bundled update message to the management device,
the management device including:
- a module for receiving said bundled update message,
- a module for generating a plurality of individual update messages, from the bundled update message,
- a module for transmitting the plurality of individual update messages, to said first devices.

12. **Signal** carrying a bundled message for updating associations between a plurality of first addresses of a mobile terminal in at least one first packet-switched mobile communication network, and a second address of the mobile terminal in a second packet-switched mobile communication network, the mobile terminal being attached by the plurality of first addresses to first devices of the at least one first packet-switched mobile communication network, said first devices being capable of directing a plurality of communication flows to the mobile terminal,
**characterized in that** the bundled message is intended for a management device, of the Home Agent type, and includes the second address and a plurality of individual information relating to the plurality of first devices,
**and in that** the bundled message is capable of triggering the generation and transmission, by the receiving management device, of individual update messages to the first devices of the at least one first network.

13. **Computer program, characterized in that** it includes instructions for implementing the steps of the method for transmitting an update message according to Claim 1, when this method is executed by a processor.

14. **Computer program, characterized in that** it includes instructions for implementing the steps of the method for unbundling an update message according to Claim 4, when this method is executed by a processor.
